# EUROPEAN PATENT APPLICATION

(11) **EP 4 524 633 A1**
(43) Date of publication of application: **19.03.2025**
(21) Application number: 24166843.3
(22) Date of filing: 27.03.2024
(51) Int. Cl.: G02B 6/44

(54) **COMPACT ARMORED INTERMITTENTLY BONDED RIBBON CABLES**

(30) Priority: 15.09.2023 IN 202311062297
(71) Applicant: HFCL Limited, New Delhi 110048 (IN)
(72) Inventor: Weimann, Peter, Georgia, 30306 (US); Agrawal, Pramod, 501359 Telangana (IN); Prakash Das, Jyoti, 501359 Telangana (IN)
(74) Representative: Office Freylinger

(57) **Abstract**

The present invention provides an armored cable (100) comprising a central core (102) comprising a plurality of intermittently bonded ribbon (IBR) bundles (104) enclosed in a protective layer (106), which is placed within an armor layer (108). An outer cable jacket (110) surrounds the armor layer (108), which optionally comprises at least a strength member (114).

## Description

### FIELD OF THE INVENTION

The present invention relates to the domain of optical fiber cables. More particularly, the present invention provides compact armored cable comprising a plurality of optical fibers.

### BACKGROUND OF THE INVENTION

High fiber count intermittently bonded ribbon (IBR) cables are commonly used in hyperscale data center interconnect applications where they are typically installed in underground conduits, which are large enough to resist rodent attack. Cables or conduits with an outer diameter greater than about 20 mm are typically not big enough for rodents to bite or claw their way into. In addition, accidental dig-ups are unlikely to occur in such hyperscale data centers.

However, IBR cables are also becoming common in traditional outside plant (OSP) telecom applications where installation takes place in public rights-of-way. Such cables may be routed in underground conduits, be directly buried in the ground, or installed aerially on poles by lashing to a support wire or existing copper cables. In aerial and direct buried installations, the cables are vulnerable to rodent attack. In conduit installations in public rights-of-way, the cables are vulnerable to dig-ups. Service providers often deploy cables protected by longitudinally applied corrugated steel armoring to prevent rodent attack/damage or dig-up damage.

Currently available armored IBR cables are relatively large and/or difficult to manufacture. Therefore, there is an unmet need for compact and cost-effective armored cables.

### SUMMARY OF THE INVENTION

In an aspect of the present invention, there is provided an optical fiber cable comprising: (a) a central core comprising a plurality of intermittently bonded ribbon (IBR) bundles; (b) a protective layer enclosing the central core; (c) an armor layer surrounding the protective layer; and (d) an outer cable jacket.

In an aspect of the present invention, IBR bundle comprises a plurality of IBRs, and each IBR comprises a plurality of optical fibers.

In an aspect of the present invention, plurality of IBRs are bundled into at least an IBR bundle by at least a bundling member, said bundling member is selected from the group consisting of yarn, tape, and the like.

In another aspect of the present invention, at least one bundling member is uniquely colored.

In another aspect of the present invention, at least 2 or more IBR bundles (104) are helically stranded or S-Z stranded.

In yet another aspect of the present invention, the protective layer is restrictively wrapped around the central core, or longitudinally placed along the length of the central core.

In yet another aspect of the present invention, the protective layer material is selected from the group consisting of polymeric tape, water swellable tape, polyester tape, barrier tape, aramid yarn, IGFR yarns, polymeric yarns, superabsorbent material, and combinations thereof.

In another aspect of the present invention, the protective layer material is a single layer of tape coated with superabsorbent material, which can be a woven tape or non-woven tape.

In an aspect of the present invention, the protective layer has thickness in range 0.1mm to 1.0mm.

In an aspect of the present invention, the armor layer is selected from the group consisting of corrugated steel tape, aluminum tape, spiral interlocking steel, and spiral interlocking aluminum.

In another aspect of the present invention, the cable comprises at least a strength member (114) partially or fully embedded in the outer cable jacket (110).

In another aspect of the present invention, the cable comprises at least a strength member (114) located in the central core (102).

In an aspect of the present invention, the strength member (114) is selected from the group consisting of steel wires, aramid reinforced plastic (ARP), fiber reinforced plastic (FRP), glass reinforced plastic (GRP), aramid yarn, and impregnated glass fiber reinforcement (IGFR) yarn.

In yet another aspect of the present invention, the strength member is coated with any one or more of non-abrasive material, adhesive material, superabsorbent material, and combinations thereof.

### BRIEF DESCRIPTION OF THE ACCOMPANYING DRAWINGS

The following drawings form part of the present specification and are included to further illustrate aspects of the present invention. The invention may be better understood by reference to the drawings in combination with the detailed description of the specific embodiments presented herein.

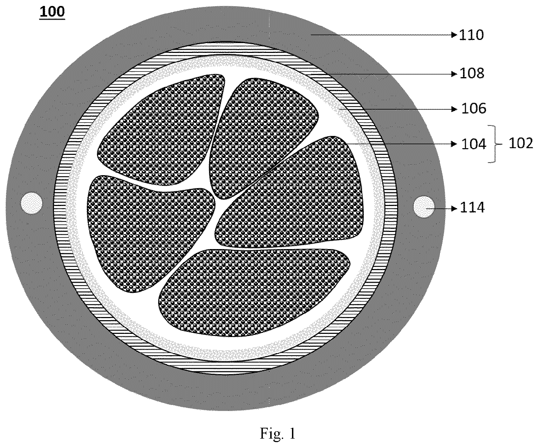

Figure 1 depicts the cross-section of a cable comprising a plurality of bundled IBRs in a central core, in accordance with an embodiment of the present invention.

### DETAILED DESCRIPTION OF THE INVENTION

For convenience, before further description of the present invention, certain terms employed in the specification, examples are collected here. These definitions should be read in light of the remainder of the disclosure and understood as by a person skilled in the art. Unless otherwise defined, all technical and scientific terms used herein have the same meaning as commonly understood by a person of ordinary skill in the art. The terms used throughout the specification are defined as follows, unless otherwise limited in specific instances.

The present inventions is not to be limited in scope by the specific embodiments described herein, which are intended for the purposes of exemplification only.

The following description includes the preferred best mode of one embodiment of the present invention. It will be clear from this description of the invention that the invention is not limited to these illustrated embodiments but that the invention also includes a variety of modifications and embodiments thereto. Therefore, the present description should be seen as illustrative and not limiting.

In any embodiment described herein, the open-ended terms "comprising," "comprises," and the like (which are synonymous with "including," "having," and "characterized by") may be replaced by the respective partially closed phrases "consisting essentially of," consists essentially of," and the like or the respective closed phrases "consisting of," "consists of, and the like. As used herein, the singular forms "a", "an" and "the" designate both the singular and the plural, unless expressly stated to designate the singular only.

In the following detailed description of the invention, reference to an embodiment refers to a particular feature of the invention. Various features described in the present description may not necessarily be part of the same embodiment. Various separate embodiments are not necessarily mutually exclusive of each other. Features described in one or more embodiments may not necessarily be required for implementation of other embodiments.

It is to be appreciated that the various embodiments described in the present description are for the purpose of illustration of the invention and is not to be construed as limiting in nature. A person skilled in the art would appreciate that various features described herein can be implemented independent of each other or in conjunction with each other. The description is not to be construed as limiting in nature for the mere lack of explicit description and all obvious modifications are contemplated to be part and parcel of the description.

The present invention provides an optical fiber cable comprising: (a) a central core comprising a plurality of intermittently bonded ribbon (IBR) bundles; (b) a protective layer enclosing the central core; (c) an armor layer surrounding the protective layer; and (d) an outer cable jacket.

In an embodiment, the optical fiber cable further comprises at least a strength member. In a preferred embodiment, the cable comprises 2 strength members. In another preferred embodiment, the 2 strength members are located diametrically opposite to each other. In an embodiment, the strength members are completely embedded in the outer cable jacket. In another embodiment, the strength members are partially embedded in the outer cable jacket. In yet another embodiment, the strength members are located in the central core. In an embodiment, the strength member located in the central core is centrally located. In an embodiment, the plurality of strength members are helically wound about a central axis. In an embodiment, at least two of the plurality of strength members are helically wound about a central axis. In an embodiment, the strength member is uncoated. In another embodiment, the strength member is coated with any one of a non-abrasive material, an adhesive, a water absorbent material, and combinations thereof. The strength member can be steel wires, aramid reinforced plastic (ARP), fiber reinforced plastic (FRP), glass reinforced plastic (GRP), aramid yarn, and impregnated glass fiber reinforcement (IGFR). In a preferred embodiment, the strength member is FRP rod. In another preferred embodiment, the strength member is steel wire.

In an embodiment, the plurality of IBR bundles further comprise at least a water-absorbent material such as water swellable yarns. In an embodiment, the water-absorbent material is located between the plurality of IBR bundles. In another embodiment, the water-absorbent material is located within each of the plurality of sub units. In yet another embodiment, the water-absorbent material is located between the plurality of sub units and within each of the plurality of sub units. In still another embodiment, the water-absorbent material is substantially coated onto one or more optical fibers.

In an embodiment, the central core comprises 2 to 48 IBR bundles. A plurality of IBRs are bundled using one or more bundling members selected from the group consisting of yarn, tape, and the like. In a preferred embodiment, the bundling member is made of material selected from group consisting of polyester, polypropylene, and aramid. In a preferred embodiment, the bundling member is colored. In a preferred embodiment, the plurality of IBR bundles are bundled with a uniquely colored bundling member for ease of identification of different bundles enclosed within the cable. In an embodiment, the bundling member is coated with at least a superabsorbent material.

In an embodiment, an IBR bundles comprise 2 to 24 IBRs. In an embodiment, each of the plurality of IBR bundles comprise the same number of IBRs. In another embodiment, each of the plurality of IBR bundles comprise different number of IBRs. In yet another embodiment, at least two of the plurality of IBR bundles comprise the same number of IBRs. In still another embodiment, at least two of the plurality of IBR bundles comprise different number of IBRs. In an embodiment, 2 or more IBR bundles are helically stranded. In another embodiment, 2 or more IBR bundles are S-Z stranded.

An IBR comprises a plurality of optical fibers. In an embodiment, an IBR comprises 4-24 optical fibers. In a preferred embodiment, an IBR comprises 12 optical fibers. In another preferred embodiment, an IBR comprises 6 optical fibers. In yet another preferred embodiment, an IBR comprises 24 optical fibers. It is to be understood by a person skilled in the art that the scope of the present invention is not to be limited by the characteristics of IBR itself or that of the optical fibers comprising the IBR.

In an embodiment, the protective layer is restrictively wrapped around the central core. In another embodiment, the protective layer is longitudinally placed along the length of the central core. In an embodiment, the protective layer restrictively wraps the plurality of the IBR bundles. In another embodiment, the protective layer is longitudinally placed along the length of the plurality of the IBR bundles. The protective layer material is selected from the group consisting of polymeric tape, water swellable tape, barrier tape, aramid yarn, IGFR yarns, polymeric yarns, superabsorbent material, and combinations thereof. In an embodiment, the protective layer is a single layer. In another embodiment, the protective layer comprises multiple layers. In a preferred embodiment, the protective layer is a single layer of tape coated with superabsorbent material. In an embodiment, the tape is woven tape. In another embodiment, the tape is non-woven tape. The thickness of the protective layer is in the range of 0.1mm to 1.0mm. In another embodiment, thickness of the protective layer is in the range of approximately 0.05mm to 0.6mm. In a preferred embodiment, the thickness of the protective layer is less than 0.6mm. In another preferred embodiment, the thickness of the protective layer is around 0.4mm. In another preferred embodiment, the thickness of the protective layer is in range of 0.3 mm to 0.6mm.

The protective layer is restrictively wrapped around the central core. In an embodiment, a substantial coupling is provided between the central core and the protective layer. In another embodiment, a substantial coupling is provided between the protective layer and armor layer. Thus, all the layers act as a composite unit during cable installation. In an embodiment, the coupling is provided by relatively high friction between the central core and protective layer as well as between the protective layer and armor layer.

In an embodiment, the protective layer provides mechanical isolation to the IBR bundles comprise in the central core from the sharp edge(s) of the armor layer. In another embodiment the protective layer provides protection to the optical fibers enclosed in IBR bundles located in the central core from potential accidental damage during removal of the outer jacket and/or the armor layer. Furthermore, the protective layer can also prevent ingression of water or moisture down the length of cable. In yet another embodiment, the protective layer provides thermal isolation between the central core and the armor layer. In a still further embodiment, the protective layer imparts tensile strength to the cable.

The protective layer is enclosed within an armor layer. The armor layer is a metallic armor layer. The armor layer is selected from the group consisting of corrugated steel tape, aluminum tape, and spiral interlocking steel. In a preferred embodiment, the armor layer is corrugated steel tape. In an embodiment, the armor layer is optionally further coated with at least one layer of a polymeric film. In an embodiment, the polymeric film consists of one or more layers of ethylene-acrylic acid (EAA) copolymer. The thickness of the armor layer is in the range of 0.07 - 0.60 mm. In a preferred embodiment, the thickness of the metallic armor layer is around 0.15mm. In a preferred embodiment, the thickness of the polymeric film coating is around 0.05 mm.

An outer cable jacket encloses the armor layer. The jacket is extruded over the armor layer. In an embodiment, the outer cable jacket material is made of polyethylene. In an embodiment, the outer cable jacket material can be a flame-retardant material. In an embodiment, the outer cable jacket material is mineral-filled LSZH resin. In an embodiment, the LSZH resin is LSZH polyolefins. In a non-limiting example of LSZH resin, the material is SPL-ZHFR-1700 manufactured by Shakun Polymers Ltd. In an embodiment, the thickness of the outer cable jacket is in the range of 0.8mm to 4.0mm. In a preferred embodiment, the thickness of the outer cable jacket is 2.2mm. In an embodiment, the exterior surface of the outer cable jacket is smooth. In another embodiment, the exterior surface of the outer cable jacket is ribbed. In yet another embodiment, the exterior surface of the outer cable jacket is slotted.

In an embodiment, the outer cable jacket comprises at least a strength member embedded in the outer cable jacket. In an embodiment, the strength member is completely embedded in the outer cable jacket. In another embodiment, the strength member is partially embedded in the inner wall of the outer cable jacket. In a preferred embodiment, the outer cable jacket comprises 2 strength members arranged longitudinally and diametrically opposite to each other. In another embodiment, the outer cable jacket comprises more than two strength members. In an embodiment, the strength member can be coated with any one of a non-abrasive material, an adhesive, a water absorbent material, and combinations thereof. The strength member can be steel wires, aramid reinforced plastic (ARP), fiber reinforced plastic (FRP), glass reinforced plastic (GRP), aramid yarn, and impregnated glass fiber reinforcement (IGFR).

In an embodiment, the cable further comprises at least a ripcord. In an embodiment, the ripcord is located below the outer jacket layer.

### EXAMPLES

In an exemplification of the present invention, as seen in Fig. 1, there is provided an optical fiber cable (100) comprising a central core (102), which comprises a plurality of IBR bundles (104). Each IBR bundle comprises a plurality of IBRs, numbers of which can vary between each IBR bundle, and each IBR comprises a plurality of optical fibers (112). It is to be noted that the number of IBR bundles, number of IBRs in each bundle, and number of optical fibers in each IBR can vary as per requirement and is not a limitation to the scope of the cable described herein. The IBR bundles are not restricted by a shape and can conform to the area available in the central core (102). This flexibility of the IBR bundles (104) allows for greater optical fiber density per cross-sectional area of the cable (100). The IBR bundles are bundled by at least a bundling member (not shown), which can be a yarn or a plurality of yarns. The yarn(s) can be uniquely colored (not shown) so as to differentiate and identify the IBR bundles. The scope of the present invention is not limited to any particular bundling member or bundling pattern. Any known bundling member and bundling pattern can be employed by a person skilled in the art as per requirement. One or more water swellable yarns (not shown) can be placed within the central core.

The central core (102) of the cable (100), which is defined by the plurality of IBR bundles (as discussed above), is enclosed by a protective layer (106). The protective layer (106) is essentially a single layer of a woven or non-woven tape coated with superabsorbent material, which substantially wraps the central core (102).). The thickness of the protective layer (106) is in the range of 0.1 mm to 1.0 mm.

The protective layer (106) is enclosed within a metallic armor layer (108), which is corrugated steel tape, outer surface of which is further coated with at least a layer of EAA copolymer (not shown). The thickness of the armor layer (106) is 0.15 mm and the thickness of the EAA copolymer layer is about 0.05 mm.

An outer cable jacket (110) is provided over the armor layer (106), which is made of Polyethylene. The thickness of the outer cable jacket (110) is around 2.2 mm. For additional strength, two strength members (114) are embedded in the outer cable jacket (108). The strength member (114) is fiber reinforced polymer (FRP) rods or steel wires. The two FRP rods or steel wires are located diametrically opposite of each other. Ripcords (not shown) can be also located between the armor layer (108) and the outer cable jacket (110).

### ADVANTAGES OF THE PRESENT INVENTION

IBR bundles have shape flexibility. The bundles need not be restricted to being circular. The shape of the IBR bundles can conform to the space available within the central core to provide higher packing density.

The cables of the present invention allow for mass fusion splicing, thus reducing cable termination time after installation.

During extrusion of the outer jacket, by using thermal barrier tape, excessive heat, which can otherwise conduct through the metal armor damaging the IBRs is avoided. Further, the thermal barrier tape can also provide mechanical isolation of the central core from the metallic armor.

The cable of the present invention can pack a higher number of fibers in lesser diameter cables.

The cable of the present invention is smaller in size, resulting in lower material usage and cost per unit length. Advantageously, the diameter of the cable of the present invention is significantly less than that of similar cables known in the art for similar application.

## Claims

1. An optical fiber cable (100) comprising:
**a.** a central core (102) comprising a plurality of intermittently bonded ribbon (IBR) bundles (104);
**b.** a protective layer (106) enclosing the central core (102);
**c.** an armor layer (108) surrounding the protective layer (106); and
**d.** an outer cable jacket (110).

2. The optical fiber cable (100) as claimed in claim 1, wherein IBR bundle (104) comprises a plurality of IBRs, and each IBR comprises a plurality of optical fibers (112).

3. The optical fiber cable (100) as claimed in claim 2, wherein a plurality of IBRs are bundled into at least an IBR bundle (104) by at least a bundling member, said bundling member is selected from the group consisting of yarn, tape, and the like.

4. The optical fiber cable (100) as claimed in claim 3, wherein at least one bundling member is uniquely colored.

5. The optical fiber cable (100) as claimed in claim 3, wherein at least 2 IBR bundles (104) are helically stranded or S-Z stranded.

6. The optical fiber cable (100) as claimed in claim 1, wherein the protective layer (106) is restrictively wrapped around the central core (102), or longitudinally placed along the length of the central core (102).

7. The optical fiber cable (100) as claimed in claim 1, wherein the protective layer (106) material is selected from the group consisting of polymeric tape, water swellable tape, aramid yarn, IGFR yarns, polymeric yarns, superabsorbent material, and combinations thereof.

8. The optical fiber cable (100) as claimed in claim 1, wherein said protective layer (106) is a single layer of tape coated with superabsorbent material, which can be a woven tape or non-woven tape.

9. The optical fiber cable (100) as claimed in claim 1, wherein the protective layer (106) has thickness in range 0.1mm to 1.0mm.

10. The optical fiber cable (100) as claimed in claim 1, wherein the armor layer (108) is selected from the group consisting of corrugated steel tape, aluminum tape, spiral interlocking steel, and spiral interlocking aluminum.

11. The optical fiber cable (100) as claimed in claim 1, comprising at least a strength member (114) partially or fully embedded in the outer cable jacket (110).

12. The optical fiber cable (100) as claimed in claim 1, comprising at least a strength member (114) located in the central core (102).

13. The optical fiber cable (100) as claimed in claims 11-12, wherein the strength member (114) is selected from the group consisting of steel wires, aramid reinforced plastic (ARP), fiber reinforced plastic (FRP), glass reinforced plastic (GRP), aramid yarn, and impregnated glass fiber reinforcement (IGFR) yarn.

14. The optical fiber cable (100) as claimed in claims 13, wherein said strength member (114) is coated with any one or more of non-abrasive material, adhesive material, superabsorbent material, and combinations thereof.
